Europäisches Patentamt

European Patent Office

Office européen des brevets

(19)

(11) Publication number: **0 010 980**
**B1**

(12)                    **EUROPEAN PATENT SPECIFICATION**

(45) Date of publication of patent specification: 25.05.83

(21) Application number: 79302434.0

(22) Date of filing: 02.11.79

(51) Int. Cl.³: **H 02 H 7/122,**
H 02 M 1/18, G 05 F 1/58

(54) Overcurrent protection circuitry for an electric motor driving circuit.

(30) Priority: 04.11.78 JP 136067/78

(43) Date of publication of application:
14.05.80 Bulletin 80/10

(45) Publication of the grant of the patent:
25.05.83 Bulletin 83/21

(84) Designated Contracting States:
DE FR GB

(56) References cited:
DE - A - 1 563 267
DE - A - 2 632 380
DE - B - 1 638 057
US - A - 3 760 258

(73) Proprietor: Fanuc Ltd
5-1, Asahigaoka, 3-chome
Hino-shi, Tokyo 191 (JP)

(72) Inventor: Kawada, Shigeki
346-15, Oaza-Shimoda
Hino-shi Tokyo (JP)
Inventor: Ishida, Hiroshi
2-73, Matsubara-cho, 2-chome
Hamura-machi Nishitama-gun Tokyo (JP)
Inventor: Sakamoto, Keiji
3-27 Tamadaira
Hino-shi Tokyo 191 (JP)

(74) Representative: Bedggood, Guy Stuart et al,
Haseltine Lake & Co. Hazlitt House 28
Southampton Buildings Chancery Lane
London WC2A 1AT (GB)

Courier Press, Leamington Spa, England.

## Overcurrent Protection Circuitry For An Electric
## Motor Driving Circuit.

This invention relates to overcurrent protection circuitry for an electric motor driving circuit.

DC motors have long been adopted for use as spindle motors in machine tools or as crane-motors, for example, but in recent years AC motors, particularly of the induction type, have increasingly been used in place of DC motors owing to the fact that AC motors can now be controlled in speed over a wide range in the same manner as DC motors which they are gradually replacing.

A known AC motor speed control system will generally include an inverter circuit for converting direct current into alternating current, the direct current being supplied by a battery or obtained by rectifying a commercial three-phase AC powder source, and an inverter drive or control circuit for varying the frequency of alternating current delivered by the inverter circuit. The alternating current delivered by the inverter circuit is then applied to the AC motor to be driven, which can be rotated at various desired speeds by varying the frequency of the alternating current.

In the inverter circuit the conversion of direct current to alternating current is accomplished by repeatedly switching thyristors on and off, if the inverter circuit is of the thyristor type. However, one disadvantage of an inverter circuit that relies on thyristors is that it must be separately provided with a circuit to turn the thyristors off since thyristors do not have the ability to perform this function themselves even if they can turn themselves on.

In recent years, high output power transistors capable of controlling motors in the several tens of kilowatts class have been developed, and this has in turn led to the development of AC motor speed control systems which employ inverter circuits comprising such high output power transistors. Such inverter circuits are much simpler than those employing thyristors since each power transistor is controlled merely by the application of a base signal which can render the transistor conductive or nonconductive. One problem encountered with inverter circuits using power transistors is that the transistors are likely to break down if an electric current in excess of a fixed value, determined by the transistors themselves, should flow through them, even if such an excess current flows only momentarily. Moreover, even a current lower in level than this fixed value can still damage the transistors if the current is an overcurrent exceeding a rated value for the transistors and it flows through the inverter circuit for a long period of time. To prevent such damage it has been conventional practice to provide speed control systems with protective circuits adapted to immediately terminate the operation of the inverter circuit in the event of an overcurrent occurring.

A disadvantage of such an arrangement is that working efficiency can be reduced since a running machine tool or belt conveyor, for example, will be shut down whenever an operator commits a minor error that causes an overload. In other words, employing a transistor-type inverter circuit to control the AC motors in such machinery renders the machinery susceptible to shut-down every time an overload occurs.

West German Offenlegungsschrift DE—A—1,563,262 discloses a process for controlling an asynchronous cage rotor machine fed via a pulse inverter, in which process a control circuit is employed to control flow of current to a rate value in the event of changes in load. Three chokes are disposed in respective output lines of a self-driven pulse inverter fed from a direct current supply. The reactive currents of the chokes are used as a measure of magnetisation current in the load machine. On the basis of this measure flow in the machine is controlled to take a desired value.

West German Auslegeschrift DE—B—1,638,057 discloses a process for controlling the speed of a three-phase machine driven by an inverter. The output currents of the inverter are measured by current measuring devices and converted into an actual current value for comparison with a desired current value for control of the speed of the rotor.

United States Patent US—A—3,760,258 discloses a static inverter system, for high power applications, with protection against short circuits in either the inverter or the load. Thyristors in a bridge network of the inverter have their firing signals terminated when current sensors located in input lines to the inverter and in an output load line indicate that a short circuit has developed. The system includes means for periodically restoring the thyristor firing circuitry to provide for automatic resumption of normal inverter operation in the event that the short circuit condition is only transient. If the short circuit condition still exists after a predetermined number of such restorations, the thyristor firing signals are permanently extinguished until the fault is corrected and the system is manually reset. West German Offenlegungsschrift DE—A1—2,632,380 discloses protection circuitry for an electric motor driving circuit using an inverter. A resistance is provided on the input side of the inverter circuit and develops a voltage proportional to the current passing into the inverter circuit. A comparator is provided for making a comparison between this voltage and the output voltage of an overcurrent value setting device. Upon detection that the input current to the inverter circuit has achieved a predetermined maximum permissible current set by the overcurrent value setting device, operation of the inverter is terminated.

Further, a resistance is provided to develop a voltage proportional to the load current of the inverter circuit. A comparator is provided for making a comparison between this voltage and an output voltage produced by a current value setting device which represents a preselected current value. When the comparator responds upon detection of the preselected current value a current regulator tends to keep the current value substantially equal to that preselected current value.

According to the present invention there is provided overcurrent protection circuitry for an AC electric motor driving circuit which includes an inverter circuit for converting direct current to polyphase AC current by switching action of transistors, and an inverter drive circuit operable to regulate the output of the inverter circuit, the overcurrent protection circuitry comprising first current detection means for detecting current flowing into the inverter circuit, first current value setting means for setting a maximum permissible input current for the inverter circuit, first comparison means, connected to the first current detection means and the first current value setting means, operable to provide a comparison of the input current flowing into the inverter circuit and the maximum permissible input-current, and means operable to terminate operation of the inverter circuit when the input current flowing to the inverter circuit achieves the maximum permissible input current, second current detection means for detecting current, second current value setting means for setting a preselected current value, second comparison means, connected to the second current detection means and the second current value setting means, operable to provide a comparison of current detected by the second current detection means and the preselected current value, and means operable to limit current detected by the second current detection means in accordance with the preselected current value, characterised in that the second current detection means comprises detection circuits operable respectively to detect different phase currents of the polyphase alternating current in the inverter circuit, the second comparison means comprises comparison circuits operable to provide comparisons of respective phase currents with the preselected current value, and characterised in that the inverter drive circuit comprises a first gating circuit arrangement, gates of which arrangement relating to respective different phase currents are controlled in dependence upon outputs of the respective comparison circuits of the second comparison means so as to be closed when the respective comparison circuit indicates that the preselected current value is achieved, setting means operable for repeatedly opening gates of the first gating circuit arrangement when they have been closed, and a second gating circuit arrangement, having inputs connected to outputs of the first gating circuit arrangement and to an output of the first comparison means, and outputs connected to transistors of the inverter circuit, and operable so as to be closed when the output of the first comparison means indicates that the maximum permissible input current is achieved.

Embodiments of the present invention can provide breakdown protection for transistors in an inverter circuit for driving an AC motor at such times that momentary currents large enough to cause breakdown flow into the inverter circuit.

Such embodiments of the present invention may include a first protection circuit operable to protect transistors against breakdown in an inverter circuit for driving an AC motor at such time that a momentary current large enough to cause breakdown flows into the inverter circuit, the first protection circuit functioning to terminate immediately operation of the inverter circuit at the instant such current flows, and a second protection circuit providing a limiting function operable, at such time that a current flowing into a transistor of the inverter circuit is about to increase to an excessive magnitude due to an overload, to hold the magnitude of the current to a rated value without terminating the operation of the inverter circuit.

Reference will now be made, by way of example, to the accompanying drawings, in which:—

Fig. 1 is a schematic block diagram for use in illustrating a general configuration for an AC motor drive system in which an embodiment of the present invention can be employed;

Fig. 2 is a detailed circuit diagram illustrating overcurrent protection circuitry embodying the present invention in a drive system as illustrated in Fig. 1; and

Fig. 3 is a schematic diagram showing respective waveforms occurring at circuit points in the arrangement illustrated in Fig. 2.

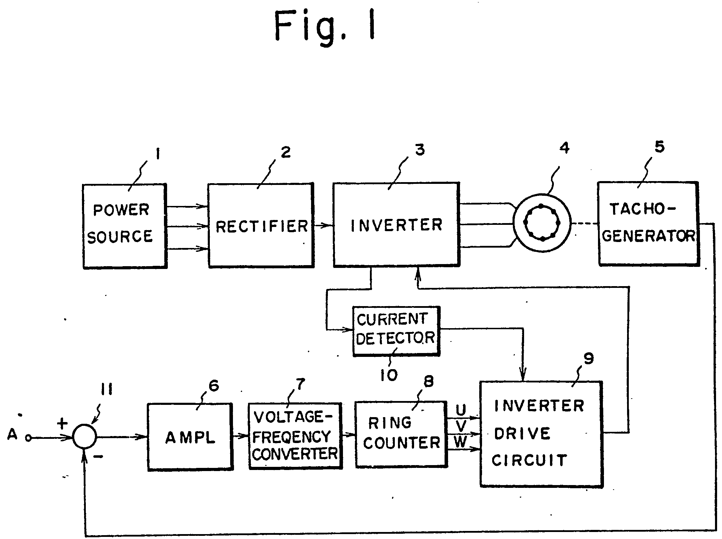

The block diagram of Fig. 1 illustrates a control system for driving an induction motor. The system comprises a three-phase commercial power source 1, a rectifier circuit 2, an inverter circuit 3 that employs power transistors, an induction motor 4, a tachometer generator 5, amplifier 6, a voltage-frequency converter (referred to hereinafter as a V-F converter) 7, a three-phase ring counter 8, an inverter drive circuit 9, and an overcurrent detection circuit 10.

A speed instruction signal applied to an input terminal A of the system is fed to the V-F converter 7 via a summing, or mixing circuit 11 and after being amplified in amplifier 6. The V-F converter produces a pulse signal output whose frequency is proportional to the voltage which appears on the output side of the amplifier 6. The three-phase ring counter 8 is operable to produce three rectangular voltage waves U, V and W successively displaced in phase by 120 degrees from one wave to the next in response to the pulse signal delivered by the V-F converter 7. The inverter driver circuit 9 is in turn responsive to the three rectangular voltage waves U, V and W from three-phase ring counter 8 to produce a drive signal for controlling groups of power transistors constituting the inverter circuit 3.

In the present example the inverter circuit 3 provides a three-phase rectangular wave power source for motor 4. Thus, in this example, the inverter circuit 3 is controlled by the inverter drive signal from drive circuit 9 to produce three-phase rectangular wave outputs by switching transistors on and off to pass or interrupt direct current delivered by rectifier circuit 2, the three-phase outputs being supplied to the induction motor 4. Power supplied from this three-phase power source causes the induction motor 4 to rotate. The speed of motor 4 is detected by the tachometer generator 5 which is adapted to apply a feedback signal representative of motor speed to the input side of the system, that is to summing circuit 11. Thereafter a closed loop comprising a control system functions to reduce to zero the output of the summing, or mixing, circuit 11, whereby the induction motor 4 is made to rotate at an instructed speed set by the instruction signal applied to terminal A. If an excessive electric current flows into the inverter circuit 3, overcurrent detection circuit 10 detects this and informs inverter drive circuit 9 which responds to protect the inverter circuit 3 by either limiting or interrupting the current flowing through it.

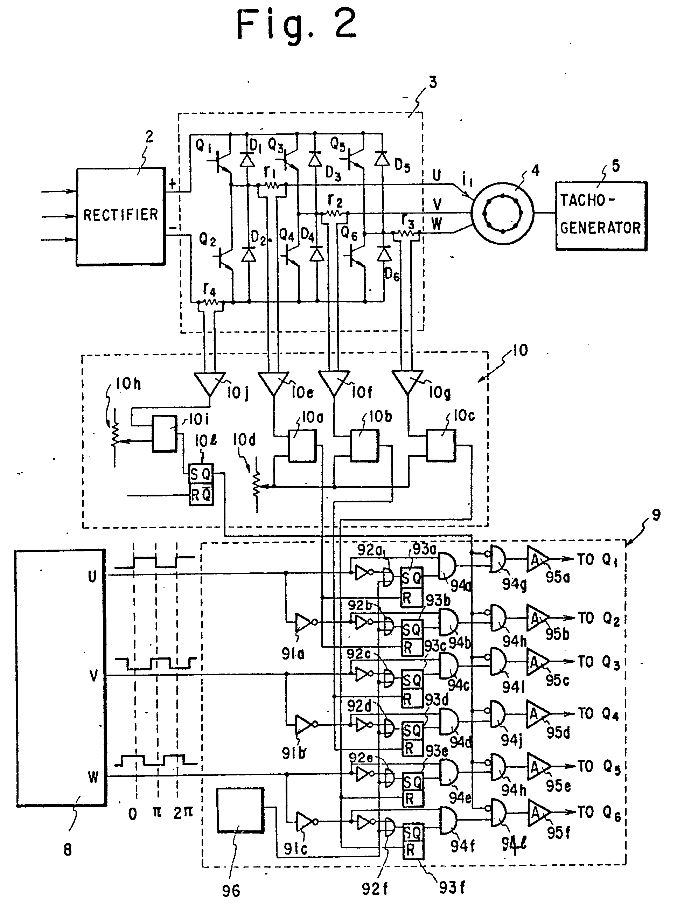

Fig. 2 shows in detail circuitry employed in an embodiment of the present invention for protecting against such an overcurrent. The inverter circuit 3 includes power transistors $Q_1$ to $Q_6$ and free wheeling diodes $D_1$ to $D_6$. Transistors $Q_1$ and $Q_2$, transistors $Q_3$ and $Q_4$, and transistors $Q_5$ and $Q_6$, respectively produce the three rectangular wave outputs of the inverter circuit 3 at their respective different phases. The respective phase outputs are labelled U, V and W in Fig. 2. Respective overcurrent detection resistors $r_1$, $r_2$, $r_3$ are inserted in each of the phase outputs U, V and W between the transistors of circuit 3 and the induction motor 4. A further overcurrent detection resistor $r_4$ is inserted in the D.C. line leading to the rectifier 2. The overcurrent detection circuit 10 includes comparators 10a, 10b and 10c having respective first input terminals connected in common to an overcurrent value setting device 10d, schematically illustrated, by way of example, as a variable resistor (potential divider), and having respective second input terminals connected to opposite ends of respective resistors $r_1$, $r_2$, $r_3$ through respective isolation amplifiers 10e, 10f, 10g. Overcurrent detection circuit 10 includes a further comparator 10i having a first input terminal connected to another overcurrent value setting device 10h, shown also as a variable resistor (potential divider), and a second input terminal connected to opposite ends of resistor $r_4$ through an isolation amplifier 10j. The output of comparator 10i is in turn connected to a latch circuit 101. Inverter drive circuit 9 comprises three inverters (logic inverters) 91a, 91b, 91c, six OR gates 92a to 92f, six flip-flops (referred to hereinafter as FF) 93a to 93f, 12 AND gates 94a to 94l, six amplifiers (drivers) 95a to 95f, and a pulse generator 96. The oscillation frequency of pulse generator 96 is set to be greater by an appropriate factor than the frequency of the rectangular waves delivered by the three-phase ring counter 8; more specifically, the oscillation frequency of generator 96 is set preferably several tens of times higher than the maximum possible frequency of the rectangular waves delivered by counter 8.

The power transistors $Q_1$ to $Q_6$ of inverter circuit 3 are protected from overcurrents by means of the following operations which can occur in the circuitry of Fig. 2.

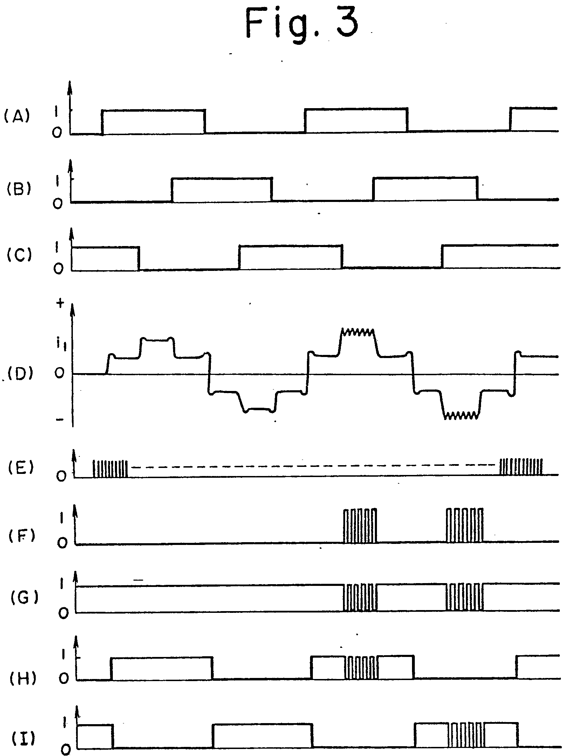

Under normal conditions the output Q of latch circuit 101 in overcurrent detection circuit 10 is at logic "0", so that the AND gates 94g to 94l in inverter drive circuit 9 are all open. Rectangular waves as shown in waveforms A, B and C in Fig. 3 are delivered to inverter drive circuit 9 from the respective U, V and W phase outputs of three-phase ring counter 8. Limiting the discussion to the phase U for simplicity, FF 93a is set when the rectangular wave of phase U goes to logic "0" to send a corresponding logic "1" signal through the OR gate 92a (provided by a logic inverter shown but not numbered). The output Q of FF 93a therefore goes to logic "1" and AND gate 94a is opened. When the rectangular wave of phase U undergoes a reversal and goes to logic "1", a corresponding "1" signal passes through the open AND gate 94a and then through the following (presently open) AND gate 94g. This signal upon passing through AND gate 94g is amplified by amplifier (driver) 95a and then applied to power transistor $Q_1$ to turn the transistor on. When the rectangular wave of phase U thereafter returns to logic "0", AND gate 94a is closed, producing an output at logic "0" and this results in the turn-off of power transistor $Q_1$.

Through inverter 91a connected to the U-phase rectangular wave output line of the ring counter 8, an inverted U-phase wave is applied to OR gate 92b, FF 93b, AND gate 94b and amplifier (driver) 95b. It will be understood from Fig. 3 that amplifier 95b produces an output signal delayed in phase by 180 degrees with respect to the output of amplifier 95a which phase delayed output is used to control power transistor $Q_2$. Thus, when power transistor $Q_1$ is turned on, power transistor $Q_2$ is turned off. Conversely, when power transistor $Q_1$ is turned off, power transistor $Q_2$ is turned on.

Similar operations to those described for the U-phase also take place in respect of the V and W phases as well, with power transistors $Q_3$ and

$Q_4$ being turned on and off alternately in repetitive fashion, as also the power transistors $Q_5$ and $Q_6$. Switching the power transistors $Q_1$ to $Q_6$ on and off in combination produces three-phase voltage waves for driving the induction motor 4. When the induction motor 4 is running normally, a current $i_1$, illustrated by the first half of waveform D in Fig. 3, flows through the U-phase line chosen to serve as an example.

If the induction motor 4 should be subjected to a heavy load and an overcurrent begin to flow in an output line of the inverter circuit 3, for example the U-phase line, there will be a large increase in the voltage developed across the resistor $r_1$ connected to the output side of the inverter circuit, and the output of comparator 10a will go to logic "1" if the voltage exceeds a value which has been set by the overcurrent value setting device 10d. The "1" output signal resets FF 93a and FF 93b, with the result that AND gates 94a, 94b are closed and power transistors $Q_1$ and $Q_2$ turned off. This operation protects the power transistors from the overcurrent and simultaneously returns the output of window comparator 10a to logic "0".

The pulse generator 96 is constantly supplying pulses as shown in waveform E of Fig. 3 to the OR gates 92a to 92f. Hence, immediately after FF 93a and FF 93b are reset they receive pulses from generator 96 through the OR gates 92a and 92b and are instantly set thereby. When this occurs the power transistors $Q_1$ and $Q_2$ are turned on or enabled as described above and hence begin to conduct in order to drive the motor. However, if the problem, such as the circuit overload, is still present and the current $i_1$ flowing through resistor $r_1$ still attempts to attain an excessive value, the transistor protection operation described above occurs again to disable power transistors $Q_1$ and $Q_2$ once more and hence protect them. The FF's 93a, 93b are reset and then immediately set again by the arrival of the pulses from pulse generator 96. This reset-set operation continues until the circuitry returns to a normal running condition wherein the size of the current flowing through resistor $r_1$ diminishes to an acceptably small value. If this is the case, power transistors $Q_1$ and $Q_2$ are permitted to continue switching normally to produce the desired rectangular wave.

Waveform F in Fig. 3 illustrates the output waveform from window comparator 10a when the comparator functions as described above for overload protection. Waveform G illustrates the Q output waveforms from FF 93a and FF 93b, and waveform H illustrates the output waveform from AND gate 94a. Waveform I illustrates the output waveform from AND gate 94b.

It should be noted that the utilization of the comparators in the overcurrent detection circuit 10 allows an overcurrent to be detected regardless of the direction in which current flows through the resistor, $r_1$ for example. Transistor protection operations as described above are performed in a similar manner in relation to power transistors $Q_3$, $Q_4$ and $Q_5$, $Q_6$. It should further be noted that the overcurrent value setting device 10d is in this case set to the maximum value of current that can be permitted to flow continuously through the power transistors which are used in the inverter circuit. The device 10d may be set, for example, to a lesser value. The maximum permissible continuous current value will usually be less than current value which, flowing through a transistor only momentarily, might cause damage.

The protection circuitry of the present invention is effective in protecting the power transistors of the inverter circuit 3 from excessive direct current supplied by the rectifier circuit 2 even if the direct current becomes excessive, and hence potentially damaging, only momentarily. This protective operation will now be described.

It will be assumed that the overcurrent setting device 10h of the overcurrent detection circuit 10 has been set to the maximum rated value of the power transistors, that is, to a value which corresponds to the maximum current that can flow into the power transistors. By way of example, let it be assumed that the three-phase commercial power source 1 introduces a surge voltage that causes a sudden increase in the output voltage of rectifier circuit 2 which will in turn start to increase the direct current flowing into the input side of inverter circuit 3. This increasing current will thus raise the voltage developed across resistor $r_4$. The output of comparator 10i will go to logic "1" if the voltage across resistor $r_4$ exceeds the value set by overcurrent detection circuit 10h, and the "1" signal will set latch circuit 101 whose Q output will be latched to logic "1". This will close all of the AND gates 94g through 94l, with the result that all of the drive signals for driving the power transistors $Q_1$ through $Q_6$ in inverter circuit 3 will be interrupted. This will disable all the power transistors and protect them from the excessive current.

The application of embodiments of the present invention is not limited to the drive system described above. Embodiments can also be applied to a control device for a so-called variable voltage-variable frequency drive system by making use of a pulse width control device to vary the width of voltage pulses, namely pulses obtained by finely dividing the voltage applied to an induction motor, in proportion to an instructed motor speed applied to the induction motor control system.

It is also to be noted that embodiments of the present invention can be employed in speed control systems other than that described above, for example any well-known speed control system can be utilized that is suited to the type of AC motor employed or the use thereof.

The embodiment of the present invention as described above thus serves to protect an inverter circuit by suppressing excessive increases in the current flowing therethrough without completely terminating the operation of the inverter circuit when the current has begun to gradually increase owing to an AC motor overload. On the other hand, full protection of the inverter circuit power transistors is assured by terminating operation of the entire inverter circuit if by some chance it should be exposed to a steep, momentary current increase large enough to damage the power transistors.

The embodiment of the present invention described above relates to a speed control system for an AC motor which includes an inverter circuit for converting a direct current into a rectangular wave polyphase alternating current by the switching action of transistors, and an inverter drive circuit adapted to apply control signals to the inverter circuit to bring the output alternating current frequency to a desired value for driving the AC motor. The system has current detection means for detecting the current that flows through the input side of the inverter circuit, and a circuit adapted to terminate the operation of the inverter circuit when the value detected by those current detection means approaches a value large enough to damage the inverter circuit transistors as at such time that a large momentary current is subjected thereto. Also provided is protective circuitry with a current-limiting function adapted to suppress an increase in the output current of the inverter circuit and limit this current to a stable value without terminating the operation of the inverter circuit as at such time that the current continuously flowing into the transistors of the inverter circuit is about to flow to its output side at an increased magnitude that could damage the transistors.

**Claims**

1. Overcurrent protection circuitry for an AC electric motor driving circuit which includes an inverter circuit (3) for converting direct current to polyphase AC current by switching action of transistors ($Q_1$ to $Q_6$), and an inverter drive circuit (9) operable to regulate the output of the inverter circuit (3), the overcurrent protection circuitry comprising first current detection means ($r_4$, 10j) for detecting current flowing into the inverter circuit (3), first current value setting means (10h) for setting a maximum permissible input current for the inverter circuit (3), first comparison means (10i), connected to the first current detection means ($r_4$, 10j) and the first current value setting means (10h), operable to provide a comparison of the input current flowing into the inverter circuit (3) and the maximum permissible input current, and means (94g to 94l) operable to terminate operation of the inverter circuit (3) when the input current flowing to the inverter circuit (3) achieves the maximum permissible input current, second current detection means ($r_1$ to $r_3$; 10e to 10g) for detecting current, second current value setting means (10d) for setting a preselected current value, second comparison means (10a to 10c), connected to the second current detection means ($r_1$ to $r_3$; 10e to 10g) and the second current value setting means (10d), operable to provide a comparison of current detected by the second current detection means ($r_1$ to $r_3$; 10e to 10g) and the preselected current value, and means (93a to 94f) operable to limit current detected by the second current detection means ($r_1$ to $r_3$; 10e to 10g) in accordance with the preselected current value, characterised in that the second current detection means ($r_1$ to $r_3$; 10e to 10g) comprises detection circuits ($r_1$, 10e; $r_2$, 10f; $r_3$, 10g) operable respectively to detect different phase currents of the polyphase alternating current in the inverter circuit (3), the second comparison means comprises comparison circuits (10a; 10b; 10c) operable to provide comparisons of respective phase currents with the preselected current value, and characterised in that the inverter drive circuit (9) comprises a first gating circuit arrangement (94a to 94f), gates of which arrangement relating to respective different phase currents are controlled in dependence upon outputs of the respective comparison circuits (10a; 10b; 10c) of the second comparison means so as to be closed when the respective comparison circuit indicates that the preselected current value is achieved, setting means (96, 92a to 92f, 93a to 93f) operable for repeatedly opening gates of the first gating circuit arrangement when they have been closed, and a second gating circuit arrangement (94g to 94l), having inputs connected to outputs of the first gating circuit arrangement (94a to 94f) and to an output of the first comparison means (10i), and outputs connected to transistors ($Q_1$ to $Q_6$) of the inverter circuit (3), and operable so as to be closed when the output of the first comparison means indicates that the maximum permissible input current is achieved.

2. Circuitry as claimed in claim 1, wherein the setting means (96, 92a to 92f, 93a to 93f) comprise a pulse generator (96) operable to generate pulses of a constant periodicity, flip-flops (93a to 93f), provided in correspondence to respective transistors ($Q_1$ to $Q_6$) of the inverter circuit (3), respective set input terminals of which are connected to receive the pulses from the pulse generator (96) and signals from a polyphase rectangular wave signal generator (8), reset terminals of which are connected to the comparison circuits (10a; 10b; 10c), and set output terminals of which are connected to inputs of the first gating circuit arrangement (94a to 94f).

3. Circuitry as claimed in claim 1 or 2, wherein the said maximum permissible current is the maximum rated current value of the driving circuit, and the said preselected current value is an overcurrent value, less than the said maximum rated current, which is a maximum current the driving circuit can continuously supply.

4. Circuitry as claimed in claim 1, 2 or 3, wherein the first gating circuit arrangement and the second gating circuit arrangement are composed of AND gates.

5. Overcurrent protection circuitry as claimed in any preceding claim, in operative combination with the drive circuit and an AC electric motor.

## Patentansprüche

1. Überlastschutz für die Antriebsschaltung eines Wechselstrom-Elektromotors, welcher eine Invertierschaltung (3) zum Umwandeln von Gleichstrom in Mehrphasenstrom durch die Schaltwirkung von Transistoren ($Q_1$ bis $Q_6$) sowie eine Invertierantriebsschaltung (9) umfaßt, die tätig ist, um das Ausgangssignal der Invertierschaltung (3) zu regulieren, mit einer ersten Stromermittlungseinrichtung ($R_4$, 10j) zur Ermittlung von in die Invertierschaltung (3) fließendem Strom, einer ersten Stromwert-Einstelleinrichtung (10h) zur Einstellung eines maximal zulässigen Eingangsstromes für die Invertierschaltung (3), einer ersten Vergleichseinrichtung (10i), die mit der ersten Stromermittlungseinrichtung ($r_4$, 10j) und der ersten Stromwert-Einstelleinrichtung (10h) verbunden ist und tätig ist, um einen Vergleich des in die Invertierschaltung (3) fließenden Eingangsstromes und des maximal zulässigen Eingangsstromes zu liefern, und einer Einrichtung (94g bis 94l), die tätig ist, um die Tätigkeit der Invertierschaltung (3) zu beenden, wenn der zu der Invertierschaltung (3) fließende Eingangsstrom den maximal zulässigen Eingangsstrom erreicht, einer zweiten Stromermittlungseinrichtung ($r_1$ bis $r_3$; 10e bis 10g) zur Ermittlung von Strom, einer zweiten Stromwert-Einstelleinrichtung (10d) zur Einstellung eines vorgewählten Stromwertes, einer zweiten Vergleichseinrichtung (10a bis 10c), die mit der zweiten Stromermittlungseinrichtung ($r_1$ bis $r_3$; 10e bis 10g) und der zweiten Stromwert-Einstelleinrichtung (10d) verbunden ist und tätig wird, um einen Vergleich von durch die zweite Stromermittlungseinrichtung ($r_1$ bis $r_3$; 10e bis 10g) ermitteltem Strom und dem vorgewählten Stromwert zu liefern, und einer Einrichtung (93a bis 94f), die tätig ist, um durch die zweite Stromermittlungseinrichtung ($r_1$ bis $r_3$; 10e bis 10g) ermittelten Strom entsprechend dem vorgewählten Stromwert zu begrenzen, dadurch gekennzeichnet, daß die zweite Stromermittlungseinrichtung ($r_1$ bis $r_3$; 10e bis 10g) Ermittlungsschaltungen ($r_1$, 10e; $r_2$, 10f; $r_3$, 10g) umfaßt, die jeweils tätig sind, um Ströme verschiedener Phasen des Mehrphasenstromes in der Invertierschaltung (3) zu ermitteln, wobei die zweite Vergleichseinrichtung Vergleichsschaltungen (10a; 10b; 10c) umfaßt, die tätig sind, um Vergleiche der Ströme jeweiliger Phasen mit dem vorgewählten Stromwert zu liefern, und dadurch gekennzeichnet, daß die Invertierantriebsschaltung (9) eine erste Gatterschaltungsanordnung (94a bis 94f) umfaßt, deren zu jeweiligen Strömen unterschiedlicher Phase gehörende Gatter in Abhängigkeit von Ausgangssignalen der jeweiligen Vergleichsschaltungen (10a; 10b; 10c) der zweiten Vergleichseinrichtung derart gesteuert werden, daß sie geschlossen werden, wenn die jeweilige Vergleichsschaltung anzeigt, daß der vorgewählte Stromwert erreicht ist, ferner eine Einstelleinrichtung (96, 92a bis 92f, 93a bis 93f) umfaßt, die tätig ist, um Gatter der ersten Gatterschaltungsanordnung wiederholt zu öffnen, wenn sie geschlossen worden sind, sowie eine zweite Gatterschaltungsanordnung (94g bis 94l) umfaßt, welche Eingänge aufweist, die mit Ausgängen der ersten Gatterschaltungsanordnung (94a bis 94f) und mit einem Ausgang der ersten Vergleichseinrichtung (10i) verbunden sind, und Ausgänge aufweist, die mit Transistoren ($Q_1$ bis $Q_6$) der Invertierschaltung (3) verbunden sind, und welche derart arbeitet, daß sie geschlossen wird, wenn das Ausgangssignal der ersten Vergleichseinrichtung anzeigt, daß der maximal zulässige Eingangsstrom erreicht ist.

2. Überlastschutz nach Anspruch 1, dadurch gekennzeichnet, daß die Einstelleinrichtung (96, 92a bis 92f, 93a bis 93f) einen Impulsgenerator (96) umfaßt, der tätig ist, um Impulse konstanter Periodizität zu erzeugen, ferner Flipflops (93a bis 93f), die entsprechend den jeweiligen Transistoren ($Q_1$ bis $Q_6$) der Invertierschaltung (3) vorgesehen sind, und deren jeweilige Setzeingangsklemmen angeschlossen sind, um die Impulse von dem Impulsgenerator (96) und Signale von einem mehrphasigen Rechteckwellen-Signalgenerator (8) zu erhalten, und deren Rücksetzklemmen mit den Vergleichsschaltungen (10a; 10b; 10c) verbunden sind, und deren Setzausgangsklemmen mit Eingängen der ersten Gatterschaltungsanordnung (94a bis 94f) verbunden sind.

3. Überlastschutz nach Anspruch 1 oder 2, dadurch gekennzeichnet, daß der maximal zulässige Strom der maximale Nennstromwert der Antriebsschaltung ist, und daß der vorgewählte Stromwert ein Überstromwert ist, der kleiner ist als der maximale Nennstrom, und welcher ein Maximalstrom ist, den die Antriebsschaltung kontinuierlich liefern kann.

4. Überlastschutz nach Anspruch 1, 2 oder 3, dadurch gekennzeichnet, daß die erste Gatterschaltungsanordnung und die zweite Gatterschaltungsanordnung aus UND-Gattern zusammengesetzt sind.

5. Überlastschutz nach einem der vorhergehenden Ansprüche, dadurch gekennzeichnet, daß er mit der Antriebsschaltung und einem Wechselstrom-Elektromotor betriebsmäßig verbunden ist.

## Revendications

1. Circuit de protection contre une surintensité dans un circuit électrique d'entraînement d'un moteur à courant alternatif, comprenant un circuit convertisseur (3) destiné à convertir un courant continu en un courant alternatif polyphasé par la commutation de transistors ($Q_1$ à $Q_6$), et un circuit de commande du convertisseur (9) agencé pour régler la sortie du circuit convertisseur (3), le circuit de protection contre les surintensités comprenant des premiers moyens de détection de courant ($r_4$, 10j) destinés à détecter le courant circulant dans le circuit convertisseur (3), des premiers moyens de réglage d'une valeur de courant (10h) destinés à fixer un courant d'entrée maximal autorisé pour le circuit convertisseur (3), des premiers moyens de comparaison (10i), reliés aux premiers moyens de détection de courant ($r_4$, 10j) et aux premiers moyens de réglage d'une valeur de courant (10h), agencés pour fournir une comparaison entre le courant d'entrée circulant vers le circuit convertisseur (3) et le courant d'entrée maximal autorisé, et des moyens (94g à 94l) pour mettre le circuit convertisseur (3) hors service lorsque le courant d'entrée circulant vers le circuit convertisseur (3) correspond au courant d'entrée maximal autorisé, des seconds moyens de détection de courant ($r_1$ à $r_3$, 10e à 10g), des seconds moyens de réglage d'une valeur de courant (10d) destinés à fixer une valeur de courant présélectionnée, des seconds moyens de comparaison (10a à 10c), reliés aux seconds moyens de détection de courant ($r_1$ à $r_3$, 10e à 10g) et aux seconds moyens de réglage d'une valeur de courant (10d), agencés pour fournir une comparaison entre le courant détecté par les seconds moyens de détection de courant ($r_1$ à $r_3$, 10e à 10g) et la valeur de courant présélectionnée, et des moyens (93a à 94f) agencés pour limiter le courant détecté par les seconds moyens de détection de courant ($r_1$ à $r_3$, 10e à 10g) à la valeur de courant présélectionnée, caractérisé par le fait que les seconds moyens de détection de courant ($r_1$ à $r_3$, 10e à 10g) comprennent des circuits de détection ($r_1$, 10e; $r_2$, 10f; $r_3$, 10g) respectivement agencés pour détecter les courants des différentes phases du courant alternatif polyphasé dans le circuit convertisseur (3), les seconds moyens de comparaison comprennent des circuits de comparaison (10a, 10b, 10c) agencés pour fournir les comparaisons entre les courants de phase respectifs et la valeur de courant présélectionnée, étant caractérisé en ce que le circuit de commande du convertisseur (9) comprend un premier circuit à portes (94a à 94f), dont les portes agissant respectivement sur les courants des différentes phases, sont contrôlées par les sorties des circuits de comparaison respectifs (10a, 10b, 10c) des seconds moyens de comparaison de façon à être fermées lorsque leur circuit de comparaison respectif indique que la valeur de courant présélectionnée est atteinte, des moyens de déclenchement (96, 92a à 92f, 93a à 93f) agencés pour ouvrir plusieurs fois les portes du premier circuit à portes lorsqu'elles ont été fermées, et un second circuit à portes (94g à 94f), dont les entrées sont reliées aux sorties du premier circuit à portes (94a à 94f) et à une sortie des premiers moyens de comparaison (10i), et dont les sorties sont reliées aux transistors ($Q_1$ à $Q_6$) du circuit convertisseur (3), et agencé pour être fermé lorsque la sortie des premiers moyens de comparaison indique que la valeur maximale autorisée du courant d'entrée est atteinte.

2. Circuit selon la revendication 1, dans lequel les moyens de déclenchement (96, 92a à 92f, 93a à 93f) comprennent un générateur d'impulsions (96) agencé pour engendrer des impulsions de périodicité constante, des bascules (93a à 93f) prévues en correspondance avec les transistors respectifs ($Q_1$ à $Q_6$) du circuit convertisseur (3), dont les bornes respectives d'entrée de déclenchement sont connectées de façon à recevoir les impulsions du générateur d'impulsions (96) et les signaux d'un générateur de signaux à ondes rectangulaires polyphasées (8), dont les bornes de remise à zéro sont reliées aux circuits de comparaison (10a, 10b, 10c), et dont les bornes de sortie de déclenchement sont reliées aux entrées du premier circuit d'interruption (94a à 94f).

3. Circuit selon l'une des revendications 1 et 2, dans lequel ladite valeur maximale autorisée du courant est la valeur nominale maximale du circuit d'entraînement, et ladite valeur de courant présélectionnée est une valeur du seuil de surintensité, inférieure à ladite valeur nominale maximale du courant, qui est le courant maximal que le circuit d'entraînement peut fournir en régime permanent.

4. Circuit selon l'une des revendications 1 à 3, dans lequel le premier circuit d'interruption et le second circuit d'interruption comprennent des portes ET.

5. Circuit selon l'une des revendications 1 à 4, en combinaison fonctionnelle avec le circuit d'entraînement et un moteur électrique à courant alternatif.

Fig. 1

0010980

0010980

Fig. 2

2

0010980

Fig. 3